Europäisches Patentamt

European Patent Office

Office européen des brevets

(19)

(11) Veröffentlichungsnummer : **0 061 716 B1**

(12) **EUROPÄISCHE PATENTSCHRIFT**

(45) Veröffentlichungstag der Patentschrift :
09.07.86

(51) Int. Cl.⁴ : **C 10 B 39/00**

(21) Anmeldenummer : 82102462.7

(22) Anmeldetag : 24.03.82

(54) **Verfahren zur Nutzung der Abwärme und zur Gewinnung von Wassergas beim Kühlen von aus einem Kammerofen ausgestossenem glühenden Koks.**

(30) Priorität : 27.03.81 DE 3112256

(43) Veröffentlichungstag der Anmeldung :
06.10.82 Patentblatt 82/40

(45) Bekanntmachung des Hinweises auf die Patenterteilung : 09.07.86 Patentblatt 86/28

(84) Benannte Vertragsstaaten :
BE FR GB IT NL

(56) Entgegenhaltungen :
DE-A- 3 000 808
DE-C- 490 982
FR-A- 2 286 182
US-A- 3 895 448

(73) Patentinhaber : HARTUNG, KUHN & CO. MASCHI-NENFABRIK GMBH
Altendorfer Strasse 120
D-4300 Essen 1 (DE)

(72) Erfinder : Jung, Richard, Prof. Dr.-Ing.
In der Delle 1
D-5270 Gummersbach 1 (DE)

(74) Vertreter : Groening, Hans Wilhelm, Dipl.-Ing.
Siebertstrasse 4 Postfach 860 340
D-8000 München 86 (DE)

Jouve, 18, rue St-Denis, 75001 Paris, France

**Beschreibung**

Aus der DE-OS 24 55 496 ist eine Einrichtung zur Trockenkühlung von Koks bekannt, die aus einem aufrechtstehenden Behälter mit oberer Kokszufuhr und Austragung des gekühlten Kokses am unteren Ende besteht, wobei im unteren Bereich des Behälters die Zuleitung und im oberen Bereich die Ableitung eines im Kreislauf geführten Kühlgases vorgesehen ist. An den Kühlbehälter schließt sich nach unten ein von einer Teilmenge des zugeführten Kühlgases abwärts durchströmter Koksaustragschacht an, dessen unteres Ende über eine Rückführungsleitung für die Kühlgasteilmenge mit dem Kühlgaskreislauf verbunden ist. Die Rückführungsleitung ist entweder mit der Zuleitung des Kühlgases zum Behälter oder mit der Ableitung des Kühlgases aus dem Behälter verbunden. Die Verzweigung des zurückgekühlten und verdichteten Kühlgasstroms in je einen durch die Koksschüttung im Kühlbehälter aufwärts bzw. im Austragschacht abwärts fließenden Teilstrom ermöglicht einen das Eintragen und Austragen des Kokses vereinfachenden Betrieb, bei dem der Gasdruck sowohl am Kopf des Behälters als auch am Austragende mit dem Umgebungsdruck übereinstimmt. Allerdings ergeben sich auch bei dieser Einrichtung, ebenso wie bei allen Anlagen mit ausschließlicher Trockenkühlung des Kokses auf eine hinreichend niedrige Austrittstemperatur, ein großer Zeit- und damit auch Raumbedarf für die Kühlung.

In der DE-OS 25 33 606 werden ein Verfahren und eine Vorrichtung zum Abkühlen von Koks angegeben, wobei in einer ersten Kühlstufe die Temperatur des Kokses von etwa 1 100 °C durch Hindurchleiten von Inertgas auf etwa 315 bis 425 °C und anschließend in einer zweiten Kühlstufe durch Aufsprühen von Wasser noch weiter gesenkt wird. Wesentlich ist hierbei, daß der in der zweiten Kühlstufe gebildete Wasserdampf am Eindringen in den Behälter der ersten Kühlstufe gehindert und damit die Bildung von Wassergas in dieser Stufe vermieden wird. Aus der hierzu vorgesehenen « Druckretensionsvorrichtung » wird der Koks von einem Vibrationsbeschicker auf eine Rutsche aufgebracht und dabei mit Wasser besprüht. Die Rinne führt zu einem Feuchtlöschbunker mit einer Vorrichtung zum kontinuierlichen Austragen des Kokses auf eine offene Fördereinrichtung. Nachteilig bei diesem Verfahren ist der erhebliche Bauaufwand, den das Verhindern eines Dampfübertritts in die erste Kühlstufe erfordert. Auch ist die Vorrichtung nicht zur Gewinnung von Wassergas geeignet, dessen Bildung gerade verhindert werden soll.

In der DE-PS 472 510 ist ein Verfahren zur trockenen Kühlung von garem Koks mittels indifferenter Gase beschrieben. Bei einer besonderen Variante des Verfahrens wird dem Kühlgas vor dem Eintritt in die Koksschüttung Wasser oder Wasserdampf zugesetzt und damit Wassergas erzeugt, das vor oder innerhalb einer Wärmenutzstelle durch Zugabe von Luft verbrannt wird. Die Wasserzugabe ist auf die im Gasstrom bis zum Eintritt in den Koks verdampfbare Menge beschränkt. Das Verfahren ist also hinsichtlich der Wärmeabgabe vom Koks an das Kühlmedium eine Trockenkühlung mit dem bereits genannten Nachteil eines großen Raumbedarfs, der hier durch die endotherme Wassergasreaktion des Wasserdampfes mit dem Koks nicht wesentlich verkleinert wird.

Auch sind mehrere Verfahren bekannt, bei denen Wasserdampf zur Kühlung von glühendem Koks benutzt wird und dabei Wassergas entsteht. Diese Verfahren sind aber insoweit unzweckmäßig, als sie das Herstellen von Wassergas und das Austragen des gekühlten Kokses nur diskontinuierlich ermöglichen (vgl. DE-PSen 413 372, 414 138 und 490 981) oder außer Wasser oder Wasserdampf noch weitere Kühlmittelkomponenten, wie Teer in Nebelform (vgl. DE-PS 567 067), oder Kohlenwasserstoffe und eine zusätzliche Vorwärmung des Kokses auf mindestens 1 200 °C (vgl. DE-OS 28 08 804) erfordern.

Der Erfindung liegt die Aufgabe zugrunde, ein Verfahren und eine Einrichtung zur Gewinnung von Abwärme und Wassergas beim Kühlen von aus einem Kammerofen ausgestoßenem glühenden Koks zur Verfügung zu stellen, wobei insbesondere folgende Vorteile erzielt werden sollen :

1. Die Abwärme soll in möglichst kurzer Zeit aus dem Koks gewonnen werden.

2. Die Abwärme soll möglichst vollständig aus dem Koks abgeführt werden.

3. Die Abwärme soll mit einfachen Mitteln gewonnen werden.

4. Der Leistungsbedarf für die Umwälzung des gasförmigen Kühlmediums soll möglichst gering sein.

5. Das Verfahren soll eine regelbare Wassergaserzeugung ermöglichen.

6. Beim Ein- und Austragen des Kokses soll weder Luft von außen her in den Kühlkreislauf eintreten noch Kühlmedium in die Umgebung entweichen.

7. Die Einrichtung soll ein möglichst kleines Bauvolumen aufweisen.

8. Beim Wärmeentzug aus dem Koks soll möglichst wenig Koksstaub anfallen.

9. Es soll möglichst hochwertiger Koks erhalten werden, der z. B. möglichst wenig Schwefel enthält.

Diese Teilaufgaben werden durch die Erfindung gelöst.

Die Erfindung betrifft somit den in den Ansprüchen gekennzeichneten Gegenstand.

Erfindungsgemäß wird der Koks nach dem Austreten aus einer Trockenkühlkammer und vor dem Eintreten in einen Austragschacht in einer Löschkammer mit Wasser versetzt. Von dem dabei in der Löschkammer unter Abkühlung des Kokses entstehenden Wasserdampf wird ein erster Teilstrom durch die Koksschüttung nach oben in die Kühlkammer abgeleitet und teilweise durch endotherme Reaktion mit dem Koks in Wassergas umgesetzt, das dem Kreislauf des Kühlgases nach dessen Reinigung und nach dessen Abkühlung in einer Wärmesenke entnommen werden kann. Ein zweiter Teilstrom wird durch die Koksschüttung in der Löschkammer nach unten abgeleitet und dann in den oberen Bereich der Löschkammer zurück- und/oder über eine Abdampfleitung in die Umgebung abgeführt.

Die der Erfindung zugrundeliegenden Teilaufgaben werden gemäß den Verfahrensansprüchen 1 bis 7 wie folgt gelöst :

1. Bei der Abwärmegewinnung ist die Abkühlzeit des Kokses kurz, da dessen Wärme sowohl durch ein gasförmiges Kühlmedium als auch durch das Verdampfen von Wasser als auch durch die endotherme chemische Reaktion der Wassergasbildung abgeführt wird und der im Kühlgas enthaltene elementare Wasserstoff die Wärmeaufnahme aus dem Koks wesentlich begünstigt. Diese Eigenschaft wirkt sich auch vorteilhaft auf die Wärmeabgabe des Kühlgases aus, z. B. in einem Abhitzekessel.

2. Die vollständige Abkühlung des Kokses bedeutet, daß sich innerhalb der Schüttung quer zur Fließrichtung keine größeren Temperaturunterschiede einstellen.

Ein entsprechender Ausgleich wird durch die nach unten verjüngten Übergänge zwischen den Kammern und dadurch erreicht, daß durch die Löschkammer ein Dampfumwälzstrom geleitet wird, der auch die Verteilung des eingesprühten Löschwassers begünstigt.

3. Die Abwärmegewinnung ist deshalb sehr einfach, weil als Kühlmedium dem System nur Wasser zugeführt zu werden braucht. Es entfallen eine externe Herstellung von Wasserdampf als Kühlmedium sowie die Bereitstellung eines Inertgases.

4. Im Vergleich zu Inertgas mit hohem Gehalt an Stickstoff führen die günstigeren Kühleigenschaften des Wassergas enthaltenden Kühlmediums unter vergleichbaren Bedingungen, bei gleichem Durchsatz und gleicher Abkühlung des Kokses, zu einer Reduzierung des Leistungsbedarfs für die Kühlgasumwälzung um mindestens 50 %.

5. Der aus der Löschkammer durch die Koksschüttung nach oben in die Kühlkammer abgeleitete Dampfteilstrom läßt sich mit dem Dampfrückstrom zur Löschkammer und mit dem Abdampfstrom in die Umgebung in den Grenzen von Null bis zu dem in der Löschkammer erzeugten Dampfstrom regeln. Bei dieser Regelung ändert sich die Vergasungsrate des Kokses von Null bis zu einem reaktionskinetischen Grenzwert, der bei einer Kokstemperatur am Kühlkammereintritt von 1 100 °C mit dem übergeleiteten Dampfstrom zunehmend, einige % betragen kann. Die auf den Koksdurchsatz bezogene Wassergaserzeugung beträgt das 2,5-fache der Vergasungsrate.

6. Die Kühlung des Kokses in zwei Stufen, durch Trockenkühlung in der Kühlkammer und Naßkühlung in der Löschkammer, ermöglicht einen Betrieb der Anlage, bei dem der Druck sowohl des Gases am Beschickungsende in der Vorkammer als auch des Dampfes im Austragschacht mit dem Umgebungsdruck übereinstimmen. Dieser Druckausgleich verhindert ein Ausströmen der Kühlmedien nach außen oder ein Eindringen von Luft aus der äußeren Atmosphäre in die Kühl- bzw. Löschkammer.

7. Durch die kombinierte Anwendung eines gasförmigen Kühlmittels, der Verdampfung einer Flüssigkeit und einer endothermen chemischen Reaktion wird die Wärme aus dem Koks so rasch abgeführt, daß für eine kostengünstige Betriebsweise der erfindungsgemäßen Einrichtung auch ein geringes Bauvolumen ausreicht.

8. Die Trockenkühlung des Kokses im Gegenstrom und die Naßkühlung in einem niederen Bereich der Kokstemperatur schließen eine schroffe Abkühlung des Kokses und damit auch ein Zerspringen der Koksstücke durch Wärmespannungen aus. Damit reduziert sich die Staubbildung bei der Kühlung auf den Abrieb innerhalb der Koksschüttung und an den Kammerwänden. Das Austragen des Staubes mit dem am Einlauf des Austragschachtes entnommenen Dampf läßt sich dadurch vermindern, daß der Staub durch nicht verdampfendes Überschußwasser teilweise gebunden wird.

9. Das Kühlgas enthält relativ viel Wasserstoff. Dieser reagiert mindestens teilweise mit dem Schwefel im Koks und senkt so dessen Schwefelgehalt.

Die Merkmale der Einrichtungsansprüche 8 bis 16 beziehen sich auf eine zweckmässige Ausführungsform einer Einrichtung zur Durchführung des vorgenannten Verfahrens.

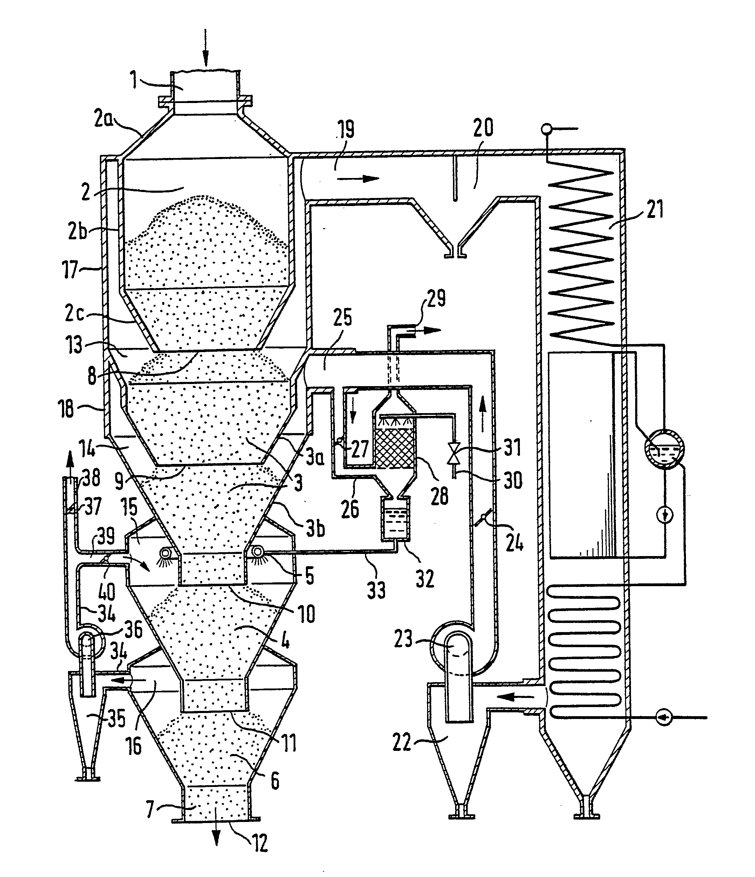

Nachstehend ist das Verfahren gemäß der Erfindung anhand der Zeichnung eines Ausführungsbeispiels einer Einrichtung zum Ausüben dieses Verfahrens erläutert.

Die Einrichtung umfaßt jeweils untereinanderliegend einen Füllschacht 1, eine verschließbare Vorkammer 2, eine Kühlkammer 3, eine Löschkammer 4 mit einer Wassersprühvorrichtung 5, ein Entnahmegehäuse 6 und einen Austragschacht 7.

Die Vorkammer 2 und ein oberer Teil 3a der Kühlkammer 3 weisen jeweils einen nach unten konzentrisch verjüngten Auslaß 8, 9 auf. An einem unteren Teil 3b der Kühlkammer 3, an der Löschkammer 4 und am Entnahmegehäuse 6 ist jeweils ein nach unten trichteförmig verjüngter Auslaß 10, 11, 12 vorgesehen.

Der Auslaß 10 der Kühlkammer 3 ragt in die Löschkammer 4, der Auslaß 11 der Löschkammer 4 in das Entnahmegehäuse 6 hinein.

Im oberen Teil 3a und im unteren Teil 3b der Kühlkammer 3, in der Löschkammer 4 und im Entnahmegehäuse 6 liegen von der Koksschüttung freie Ringräume 13, 14, 15, 16 vor.

Die Vorkammer 2 weist einen oberen Teil 2a auf, der an den Füllschacht 1 angeschlossen ist und sich nach unten konzentrisch erweitert. Der obere Teil 2a geht in einen zylindrischen mittleren Teil 2b der Vorkammer 2 über, die in einen am Auslaß 8 konzentrisch verjüngten unteren Teil 2c ausläuft. Der mittlere Teil 2b und der untere Teil 2c der Vorkammer 2 sind von einem äußeren zylindrischen Ringmantelabschnitt 17 umgeben.

Der obere Teil 3a der Kühlkammer 3 wird zu etwa 2/3 in axialer Richtung von einem zylindrischen unteren Ringmantelabschnitt 18 umgeben, der die Fortsetzung des Ringmantelabschnitts 17 nacht unten ist. Der untere Ringmantelabschnitt 18 geht nach unten in den trichterförmig sich verjüngenden unteren Teil 3b der Kühlkammer 3 über.

Von der Kühlkammer 3 führt eine Kühlgasableitung 19 über einen Grobabscheider 20, eine Wärmesenke 21, einen Zyklonabscheider 22, ein Gebläse 23 sowie ein Drosselorgan 24 und tritt als Kühlgaszuleitung 25 durch den oberen Bereich des unteren Ringmantelabschnitts 18 wieder in die Kühlkammer 3.

Von der Kühlgaszuleitung 25 zweigt eine Entnahmeleitung 26 über ein Drosselorgan 27 und einen Rieselkühler 28 zu einer Abnahmestelle 29 ab.

Zum Rieselkühler 28 führt eine Wasserzuleitung 30 über ein Drosselorgan 31. Der Rieselkühler 28 weist einen Kondensatbehälter 32 auf, der über eine Verbindungsleitung 33 mit der Wassersprühvorrichtung 5 in der Löschkammer 4 verbunden ist.

Vom Entnahmegehäuse 6 führt eine Abnahmeleitung 34 über einen Zyklonabscheider 35, ein Gebläse 36 und ein Drosselorgan 37 zu einem Abdampfrohr 38. Zwischen dem Gebläse 36 und dem Drosselorgan 37 zweigt von der Abnahmeleitung 34 eine Rückleitung 39 ab, die über ein Drosselorgan 40 in die Löschkammer 4 mündet.

Das erfindungsgemäße Verfahren verläuft wie folgt :

Wie bei der bekannten Trockenkühlung mit Inertgas wird der Koks unter Luftabschluß chargenweise von oben durch den Füllschacht 1 in die Einrichtung eingebracht und unten kontinuierlich durch den Austragschacht 7 ausgeschleust. Auf seinem Weg durch die Vorkammer 2, die Kühlkammer 3 und die Löschkammer 4 wird der Koks von ca. 1 100 °C beim Eintritt auf ca. 100 °C beim Austritt abgekühlt. Die Vorkammer 2 ermöglicht als Zwischenspeicher mit stoßweiser Zunahme und allmählichem Absinken des Füllstandes einen stationären Betrieb der Kühlkammer 3. In dieser wird ein im wesentlichen aus Wassergas (CO + H$_2$) und Wasserdampf bestehendes Kühlgas im Gegenstrom durch die Koksschüttung geleitet, das sich dabei von ca. 150 °C am Ende der Kühlgaszuleitung 25 auf ca. 600 bis 850 °C am Anfang der Kühlgasableitung 19 erhitzt. Die letztgenannte Temperatur von 600 °C des Kühlgases gilt für die maximal mögliche Erzeugung von Wassergas in der oberen heißen Zone der Kühlkammer 3. Das Wassergas entsteht hierbei gemäß der endothermen Reaktion

C + H$_2$O → CO + H$_2$ aus dem Wasserdampf (H$_2$O) im Kühlgas und dem Kohlenstoff (C) im Koks. Durch diese Reaktion wird dem Koks ein Teil der zu gewinnenden Wärme entzogen, wodurch seine Temperatur sinkt. Die Abmessungen und die Betriebsdaten der Einrichtung sind so aufeinander abgestimmt, daß der Koks beim Eintritt in die Löschkammer 4 bis auf unter 400 °C abgekühlt ist.

Das aus dem oberen Ringmantelabschnitt 17 in die Kühlgasableitung 19 abströmende heiße Kühlgas wird in dem Grobabscheider 20 von einem Teil des mitgeführten Koksstaubes gereinigt und dann in der Wärmesenke 21, z. B. einem Abhitzekessel zur Erzeugung von höhergespanntem Sekundärdampf als Arbeitsfluid eines Dampfkraftprozesses, auf ca. 150 °C abgekühlt. Das in dem Zyklonabscheider 22 nachgereinigte und dann im Gebläse 23 verdichtete Kühlgas verzweigt sich nach dem Drosselorgan 24 in einen über die Entnahmeleitung 26, das Drosselorgan 27 und den Rieselkühler 28 zur Abnahmestelle 29 für die Fremdverwertung des entfeuchteten Gases geleiteten Entnahmestrom und in einen Rückstrom über die Kühlgaszuleitung 25 zur Kühlkammer 3. Im stationären Fall entspricht der Massenanteil des Wassergases im Entnahmestrom der Wassergaserzeugung in der Koksschüttung. Zum Ausgleich des mit dem Entnahmestrom abgeführten und des bei der Wassergaserzeugung verbrauchten Wasserdampfes wird eine äquivalente Menge Wasser über die Wasserzuleitung 30 und das Drosselorgan 31 dem Rieselkühler 28 als Kühlwasser zugeführt. Dieses Kühlwasser vereinigt sich im Rieselkühler 28 mit dem dort gebildeten Kondensat und wird mit diesem in dem Kondensatbehälter 32 gesammelt. Von dort wird das Wasser über die Verbindungsleitung 33 in die Wassersprühvorrichtung 5 in der Löschkammer 4 eingespeist. Der Rieselkühler 28 hat gegenüber anderen Kühlern den Vorteil, daß er aus dem Entnahmestrom des Kühlgases den darin enthaltenen Staub abtrennt.

Das in der Löschkammer 4 versprühte Wasser verdampft innerhalb der dort noch hinreichend heißen Koksschüttung. Dabei entspricht die erzeugte Dampfmenge der Summe der Dampfteilmengen, die einerseits nach oben durch den trichterförmigen Auslaß 10 der Kühlkammer 3 in diese Kammer und andererseits nach unten durch den trichterförmigen Auslaß 11 der Löschkammer 4 in den Ringraum 16 des Entnahmegehäuses 6, die Abnahmeleitung 34, den Zyklonabscheider 35, das Gebläse 36 und das Abdampfrohr 38 in die Umgebung abgeleitet werden. Der Dampferzeugung in der Löschkammer 4 ist ein Dampfumlaufstrom durch die Koksschüttung nach unten über das Entnahmegehäuse 6, die Abnahmeleitung 34, den Zyklonabscheider 35, das Gebläse 36 und die Rückleitung 39 zur Löschkammer 4 überlagert. Dieser Umlaufstrom ermöglicht im Zusammenhang mit der Einstellung des Drosselorgans 37 im Abdampfrohr 38 und des Drosselorgans 40 in der Rückleitung 39 eine Angleichung des Dampfdrucks im Austragschacht 7 an den Umgebungsdruck sowie eine Regelung des in die Kühlkammer 3 durch deren Auslaß 10 abgeleiteten Dampfstroms. Dieser letztgenannte Dampfstrom ist zwischen dem Wert 0, bei dem die gesamte, in der Löschkammer erzeugte Dampfmenge durch das Abdampfrohr 38 abgeleitet wird, und einem mit dieser Dampfmenge bei geschlossenem Abdampfrohr 38 übereinstimmenden Maximalwert einstellbar. Die jeweilige Einstellung ist gekennzeichnet durch den Überdruck des zurückgeführten Dampfes in der Löschkammer 4 gegenüber dem Gasdruck beim Eintritt des Kühlgases aus der Kühlgaszuleitung 25 in die Kühlkammer 3, wobei dieser Gasdruck seinerseits vom Druckabfall des Kühlgases in der Kühlkammer 3 und dem mit dem Umgebungsdruck übereinstimmenden Gasdruck in der Vorkammer 2 bestimmt ist. Mit dem aus der Löschkammer 4 in die Kühlkammer 3 abgeleiteten Dampfstrom ändern sich die Wassergaserzeugung, die Zusammensetzung des Kühlgases und der über die Entnahmeleitung 26 abgeführte Kühlgasstrom, der durch das Drosselorgan 27 derart geregelt wird, daß sich in der Vorkammer 2 der geforderte Druckausgleich mit der Umgebung einstellt.

Eine Begrenzung des über die Entnahmeleitung 26 abgeführten Kühlgasstroms und damit auch des vorgenannten Dampfstroms aus der Löschkammer 4 in die Kühlkammer 3 ergibt sich durch die Forderung, daß außer dem in der Löschkammer 4 über die Wassersprühvorrichtung 5 versprühten Löschwasser kein zusätzliches Kühlwasser für die Kühlung und Entfeuchtung des entnommenen Kühlgases im Rieselkühler 28 herangezogen werden soll. Für die Kühlung des Kokses in der Löschkammer 4 von ca. 350 °C im Auslaß 10 der Kühlkammer 3 auf ca. 100 °C im Austragschacht 7 ist bei vollständiger Verdampfung eine Löschwassermenge von etwa 13 % der Koksmenge erforderlich. Damit läßt sich eine Wasserdampfmenge aus dem Kühlgas von etwa 1,5 % der Koksmenge im Rieselkühler 28 kondensieren. Für diesen Extremfall folgt aus den Massenstrombilanzen bei einer angenommenen Vergasungsrate des Kokses von 3 %, daß der in die Kühlkammer 3 abgeleitete Dampfstrom 6 %, der nach außen abgeführte Dampfstrom 7 %, der Kühlgasentnahmestrom 9 % und die Wassergaserzeugung 7,5 % der Koksmenge sowie der Massenanteil des Wassergases im Kühlgasrückstrom ca. 83 % betragen. Bei dieser hohen Wassergaskonzentration ergeben sich die bereits erwähnten, dem Wasserstoff zuzuschreibenden günstigen Wärmeübertragungseigenschaften des Kühlgases.

Gegebenenfalls kann die Wand der Vorkammer 2 teilweise oder ganz in üblicher Weise so ausgebildet sein, daß sie aus der Koksschüttung in der Vorkammer 2 Wärme aufnehmen und diese zur weiteren Nutzung entweder innerhalb dieser Wandung ableiten oder an das zur Kühlgasableitung 19 strömende Kühlgas weitergeben kann.

Einzelheiten des angegebenen Verfahrens und der beschriebenen Einreichung können auch in dem Fachmann geläufiger Weise abgewandelt werden. Z. B. sind unterschiedliche Ausführungsformen für die Wärmesenke, die Reinigungsvorrichtungen für Kühlgas und Wasserdampf, die Gebläse, die Drosselorgane und den Kühler für das entnommene Kühlgas möglich. Auch können zusätzlich Fördervorrichtungen für flüssige oder gasförmige Medien vorgesehen sein.

**Patentansprüche**

1. Verfahren zur Nutzung der Abwärme und zur Gewinnung von Wassergas beim Kühlen von aus einem Kammerofen ausgestoßenem glühenden Koks in zwei Stufen, wobei

a) in einer ersten Stufe mit einem Kühlgas trocken gekühlt wird und dazu das Kühlgas in den unteren Bereich einer Kühlzone eintritt, im Gegenstrom durch die in der Kühlzone absinkende Koksschüttung unter Wärmeaufnahme aufsteigt, im oberen Bereich der Kühlzone aus dieser austritt, in einer Wärmesenke zurückgekühlt, dann gereinigt und im Kreislauf wieder in den unteren Bereich der Kühlzone eingeführt wird sowie

b) in einer zweiten Stufe bei einer gegenüber der ersten Stufe niedrigeren Kokstemperatur in einer Löschzone mit Wasser naß gekühlt wird, woraufhin der gekühlte Koks über eine Austragzone ausgetragen wird,
dadurch gekennzeichnet, daß in der ersten Stufe gemäß a) als Kühlgas ein Gemisch aus Wassergas und Wasserdampf eingesetzt wird sowie in der zweiten Stufe gemäß b) der beim Verdampfen des in die Löschzone eingespeisten Wassers gebildete Wasserdampf teilweise durch die Koksschüttung hindurch in die Austragzone geleitet, von dort abgezogen, nach einer Reinigung in die Umgebung abgeführt und/oder in die Löschzone rückgespeist sowie außerdem teilweise durch die Koksschüttung in die über der Löschzone liegende Kühlzone geleitet wird.

2. Verfahren nach Anspruch 1, dadurch gekennzeichnet, daß von dem in der Wärmesenke abgekühlten Kühlgas über eine Entnahmeleitung eine solche Menge zur Fremdverwertung entnommen wird, die der Menge des aus der Löschzone in die Kühlzone übertretenden Wasserdampfes und der in der Kühlkammer gebildeten Menge an Wassergas entspricht.

3. Verfahren nach Anspruch 2, dadurch gekennzeichnet, daß die abgeführte Kühlgasmenge so geregelt wird, daß der Gasdruck in einer Aufgabezone, die der Kühlzone im Fließweg des Kokses vorgeschaltet ist, mit dem Umgebungsdruck übereinstimmt.

4. Verfahren nach Anspruch 3, dadurch gekennzeichnet, daß der Wasserdampf, der in dem abgeführten Kühlgas enthalten ist, kondensiert wird und das Kondensat zusammen mit dem zum Kondensieren eingesetzten Kühlwasser anschließend in die Löschzone eingesprüht wird.

5. Verfahren nach Anspruch 4, dadurch gekennzeichnet, daß die Menge des in die Löschzone gesprühten Wassers in Abhängigkeit von der Temperatur des Kokses in der Austragzone geregelt wird.

6. Verfahren nach Anspruch 4, dadurch gekennzeichnet, daß in die Löschzone so viel Wasser eingespeist wird, daß der ausgetragene Koks noch überschüssiges Wasser enthält.

7. Verfahren nach Anspruch 1, dadurch gekennzeichnet, daß der abgeleitete Wasserdampfteilstrom und der in die Löschzone zurückgeführte Wasserdampfteilstrom so geregelt werden, daß eine gewählte Druckdifferenz zwischen dem Dampf in der Löschzone und dem Kühlgas in der Kühlzone aufrechterhalten wird und der Druck am unteren Ende der Austragzone mit dem Umgebungsdruck übereinstimmt.

8. Einrichtung zur Durchführung des Verfahrens nach einem der Ansprüche 1 bis 7, die jeweils untereinanderliegend einen Füllschacht (1), eine Vorkammer (2), eine Kühlkammer (3), eine Löschkammer (4) mit einer Wassersprühvorrichtung (5), ein Entnahmegehäuse (6) und einen Austragschacht (7) aufweist und mit einer von der Kühlkammer (3) abführenden Kühlgasableitung (19) und nachfolgend einem Grobabscheider (20), einer Wärmesenke (21), einem Gebläse (23) und einer Kühlgaszuleitung (25) zur Kühlkammer (3) ausgerüstet ist, gekennzeichnet durch eine von der Kühlgaszuleitung (25) abführende Entnahmeleitung (26) mit einem Drosselorgan (27) und eine vom Entnahmegehäuse (6) abführende Abnahmeleitung (34), die zu einem Zyklonenabscheider (35), einem Gebläse (36) und einem Abdampfrohr (38) mit einem Drosselorgan (37) führt, sowie durch eine Rückleitung (39) mit einem Drosselorgan (40), die zwischen dem Gebläse (36) und dem Drosselorgan (37) von der Abnahmeleitung (34) zum Ringraum (15) der Löschkammer (4) abzweigt.

9. Einrichtung nach Anspruch 8, gekennzeichnet durch je einen nach unten konzentrisch verjüngten Auslaß (8, 9) an der Vorkammer (2) und an einem oberen Teil (3a) der Kühlkammer (3) sowie je einen trichterförmigen Auslaß (10, 11, 12) an einem unteren Teil (3b) der Kühlkammer (3), an der Löschkammer (4) und am Entnahmegehäuse (6).

10. Einrichtung nach Anspruch 9, dadurch gekennzeichnet, daß der Auslaß (10) an der Kühlkammer (3) in die Löschkammer (4) und der Auslaß (11) der Löschkammer (4) in das Entnahmegehäuse (6) hineinragen.

11. Einrichtung nach Anspruch 9, gekennzeichnet durch von der Koksschüttung frei bleibende Ringräume (13, 14, 15, 16) im oberen Teil (3a) und im unteren Teil (3b) der Kühlkammer (3), in der Löschkammer (4) und im Entnahmegehäuse (6).

12. Einrichtung nach Anspruch 9, dadurch gekennzeichnet, daß die Vorkammer (2) einen oberen Teil (2a), der nach oben an den Füllschacht (1) angeschlossen und nach unten konzentrisch erweitert ist, einen zylindrischen mittleren Teil (2b) sowie einen am Auslaß (8) trichterförmig verjüngten unteren Teil (2c) aufweist, und daß der mittlere Teil (2b) sowie der untere Teil (2c) der Vorkammer (2) von einem oberen zylindrischen Ringmantelabschnitt (17) umgeben sind, dessen oberer Bereich in die Kühlgasableitung (19) übergeht.

13. Einrichtung nach den Ansprüchen 8 und 11, gekennzeichnet durch einen unteren zylindrischen Ringmantelabschnitt (18), der den oberen Bereich des oberen Teils (3a) der Kühlkammer (3) zu etwa 2/3 in axialer Richtung umgibt und nach unten in den trichterförmigen unteren Teil (3b) der Kühlkammer (3) übergeht, wobei in den oberen Bereich des unteren Ringmantelabschnitts (18) die Kühlgaszuleitung (25) einmündet.

14. Einrichtung nach Anspruch 11, gekennzeichnet durch eine Wassersprühvorrichtung (5) im Ringraum (15) der Löschkammer (4).

15. Einrichtung nach Anspruch 8, gekennzeichnet durch einen Rieselkühler (28), der an die Entnahmeleitung (26) angeschlossen ist.

16. Einrichtung nach den Ansprüchen 14 und 15, gekennzeichnet durch eine Verbindungsleitung (33) zwischen einem Kondensatbehälter (32) des Rieselkühlers (28) und der Wassersprühvorrichtung (5).

**Claims**

1. A process for utilizing waste heat and for obtaining water gas during the cooling of incandescent coke ejected from a chamber oven, this process being in two stages, in which

a) in a first stage, dry-cooling is effected with a cooling gas and, for this purpose, the cooling gas enters the lower region of a cooling zone, rises by counterflow through the coke bed falling in the cooling zone, with the absorption of heat, flows out form the cooling zone in the upper region of the latter, is recooled in a heat sink and is then cleaned, and is recirculated into the lower region of the cooling zone, and

b) in a second stage, at a lower coke temperature relative to the first stage, is wet-cooled with water in a quenching zone, whereupon the cooled coke is discharged via a discharge zone, characterized in that in the first stage according to a), a mixture of water gas and water vapor is used as the cooling gas, and, in the second stage according to b), the water vapor formed during evaporation of the water fed into the quenching zone is conveyed partially through the coke bed, drawn off from there, discharged into the environment after cleaning and/or fed back into the quenching zone and, in addition, is conveyed partially through the coke bed into the cooling zone located above the quenching zone.

2. A process as claimed in claim 1, characterized in that there is extracted via an extraction line, from the cooling gas cooled in the heat sink, for external utilization a quantity which corresponds to the quantity of water vapor overflowing from the quenching zone into the cooling zone and to the quantity of water gas formed in the cooling chamber.

3. A process as claimed in claim 2, characterized in that the discharged quantity of cooling gas is regulated so that the gas pressure in a feed zone located in front of the cooling zone in the flow path of the coke corresponds to the ambient pressure.

4. A process as claimed in claim 3, characterized in that the water vapor contained in the discharged cooling gas is condensed and the condensate, together with the cooling water used for condensation, is subsequently sprayed into the quenching zone.

5. A process as claimed in claim 4, characterized in that the quantity of water sprayed into the quenching zone is regulated as a function of the temperature of the coke in the discharge zone.

6. A process as claimed in claim 4, characterized in that so much water is fed into the quenching zone that the discharged coke still contains excess water.

7. A process as claimed in claim 1, characterized in that the discharged part stream of water vapor and the part stream of water vapor returned to the quenching zone are regulated so that a selected pressure difference is maintained between the vapor in the quenching zone and the cooling gas in the cooling zone and the pressure at the lower end of the discharge zone corresponds to the ambient pressure.

8. An apparatus for carrying out the process as claimed in any of claims 1 to 7 which has, located under one another, a filling shaft (1), a pre-chamber (2), a cooling chamber (3), a quenching chamber (4) with a waterspray device (5), an extraction housing (6) and a discharge shaft (7), and is equipped with a cooling-gas discharge line (19) leading away from the cooling chamber (3) and, in succession, a coarse separator (20), a heat sink (21), a blower (23) and cooling-gas delivery line (25) to the cooling chamber (3), characterized in that there is an extraction line (26) leading away from the cooling-gas delivery line (25), with a throttling device (27), and there is a take-off line (34) which leads away from the extraction housing (6) and which leads to a cyclone separator (35), a blower (36) and an exhaust stream pipe (38) with a throttling device (37), and a return line (39) with a throttling device (40) which branches off between the blower (36) and the throttling device (37) from the take-off line (34) to the annular space (15) of the quenching chamber (4).

9. An apparatus as claimed in claim 8, characterized in that there is an outlet (8, 9), tapered concentrically downwards respectively on the pre-chamber (2) and on an upper part (3a) of the cooling chamber (3) and there is a funnel-shaped outlet (10, 11, 12) respectively on a lower part (3b) of the cooling chamber (3), on the quenching chamber (4) and on the extraction housing (6).

10. An apparatus as claimed in claim 9, characterized in that the outlet (10) on the cooling chamber (3) projects into the quenching chamber (4) and the outlet (11) of the quenching chamber (4) projects into the extraction housing (6).

11. An apparatus as claimed in claim 9, characterized in that there are annular spaces (13, 14, 15, 16), remaining free of the coke bed, in the upper part (3a) and in the lower part (3b) of the cooling chamber (3), in the quenching chamber (4) and in the extraction housing (6).

12. An apparatus as claimed in claim 9, characterized in that the pre-chamber (2) has an upper part (2a) which is connected at the top to the filling shaft (1) and widened concentrically downwards, a cylindrical middle part (2b) as well as a lower part (2c), which is tapered in the form of a funnel at the outlet (8) and that the middle part (2b) and the lower part (2c) of the pre-chamber (2) are surrounded by an upper cylindrical annular shell portion (17), the upper region of which merges into the cooling gas discharge line (19).

13. An apparatus as claimed in claim 8 or 11, characterized in that there is a lower cylindrical annular shell portion (18) which surrounds the upper region of the upper part (3a) of the cooling chamber (3) over approximately 2/3 in an axial direction and which merges downwards into the funnel-shaped lower part (3b) of the cooling chamber (3), the cooling-gas delivery line (25) opening into the upper region of the lower annular shell portion (18).

14. An apparatus as claimed in claim 11, characterized in that there is a water-spray device (5) in the annular space (15) of the quenching chamber (4),

15. An apparatus as claimed in claim 8, characterized in that there is a packed spray cooler (28) which is connected to the extraction line (26).

16. An apparatus as claimed in claim 14 or 15, characterized in that there is a connecting line (33) between a condensate vessel (32) of the packed spray cooler (28) and the water-spray device (5).

**Revendications**

1. Procédé pour l'utilisation de la chaleur perdue et pour la production de gaz à l'eau, en deux étapes, lors du refroidissement de coke incandescent déchargé d'un four à chambres, procédé dans lequel

a) lors d'une première étape, le refroidissement a lieu à sec avec un gaz de refroidissement et, à cette fin, le gaz de refroidissement pénètre dans la région inférieure d'une zone de refroidissement, monte à contre-courant, en captant de la chaleur, à travers la masse de coke descendant dans la zone de refroidissement, sort de la zone de refroidissement dans la région supérieure de cette dernière, est à nouveau refroidi dans un puits de chaleur, puis est à nouveau introduit dans la région inférieure de la zone de refroidissement après avoir été épuré et mis en circulation, et

b) lors d'une seconde étape, le refroidissement a lieu par voie humide, avec de l'eau, dans une zone d'extinction et à une température du coke inférieure par rapport à la première étape, après quoi le coke refroidi est déversé par l'intermédiaire d'une zone de déversement,

caractérisé par le fait que, au cours de la première étape selon a), l'on utilise en tant que gaz de refroidissement un mélange de gaz à l'eau et de vapeur d'eau et, au cours de la seconde étape selon b), la vapeur d'eau formée lors de l'évaporation de l'eau délivrée à la zone d'extinction est, en partie, dirigée à travers la masse de coke vers la zone de déversement, extraite de cette zone, évacuée dans l'espace environnant après une épuration et/ou réintroduite dans la zone d'extinction, et est, en outre, en partie dirigée à travers la masse de coke vers la zone de refroidissement située au-dessus de la zone d'extinction.

2. Procédé selon la revendication 1, caractérisé par le fait qu'on prélève, du gaz de refroidissement refroidi dans le puits de chaleur, en vue d'une exploitation étrangère et par l'intermédiaire d'un conduit de prélèvement, une quantité correspondant à la quantité de vapeur d'eau passant de la zone d'extinction à la zone de refroidissement, ainsi qu'à la quantité de gaz à l'eau engendrée dans la chambre de refroidissement.

3. Procédé selon la revendication 2, caractérisé par le fait que la quantité de gaz de refroidissement évacuée est réglée de telle sorte que la pression gazeuse coïncide avec la pression environnante, dans une zone de délivrance en amont de laquelle la zone de refroidissement est disposée sur le trajet d'écoulement du coke.

4. Procédé selon la revendication 3, caractérisé par le fait que la vapeur d'eau renfermée par le gaz de refroidissement évacué est condensée, le condensat étant ensuite pulvérisé dans la zone d'extinction conjointement à l'eau de refroidissement utilisée pour la condensation.

5. Procédé selon la revendication 4, caractérisé par le fait que la quantité de l'eau pulvérisée dans la zone d'extinction est réglée en fonction de la température du coke dans la zone de déversement.

6. Procédé selon la revendication 4, caractérisé par le fait qu'on délivre, à la zone d'extinction, une quantité d'eau suffisante pour que le coke déversé renferme encore de l'eau excédentaire.

7. Procédé selon la revendication 1, caractérisé par le fait que le flux partiel de vapeur d'eau évacué et le flux partiel de vapeur d'eau réintroduit dans la zone d'extinction sont réglés de telle sorte qu'une différence de pression sélectionnée entre la vapeur dans la zone d'extinction et le gaz de refroidissement dans la zone de refroidissement soit entretenue, et que la pression régnant à l'extrémité inférieure de la zone de déversement coïncide avec la pression environnante.

8. Dispositif pour la mise en œuvre du procédé selon l'une des revendications 1 à 7, comprenant, respectivement les uns au-dessous des autres, un puits d'emplissage (1), un pré-compartiment (2), une chambre de refroidissement (3), une chambre d'extinction (4) munie d'un dispositif (5) de pulvérisation d'eau, un boîtier préleveur (6) et un puits de déversement (7), et équipé d'un conduit (19) d'évacuation du gaz de refroidissement partant de la chambre de refroidissement (3), puis successivement d'un séparateur grossier (20), d'un puits de chaleur (21), d'une soufflerie (23) et d'un conduit (25) d'amenée du gaz de refroidissement débouchant dans la chambre de refroidissement (3), caractérisé par un conduit de prélèvement (26) muni d'un organe d'étranglement (27) et partant du conduit (25) d'amenée du gaz de refroidissement, et par un conduit de soutirage (34) qui part du boîtier préleveur (6) et gagne un séparateur (35) à cyclone, une soufflerie (36) et un tube (38) d'évacuation de vapeur doté d'un organe d'étranglement (37), ainsi que par un conduit de réintroduction (39) qui est pourvu d'un organe d'étranglement (40) et qui bifurque, entre la soufflerie (36) et l'organe d'étranglement (37), du conduit de soutirage (34) vers l'espace annulaire (15) de la chambre d'extinction (4).

9. Dispositif selon la revendication 8, caractérisé par un orifice respectif d'évacuation (8, 9) décroissant concentriquement de section vers le bas sur le pré-compartiment (2) et sur une partie supérieure (3a) de la chambre de refroidissement (3), ainsi que par un orifice infundibuliforme d'évacuation (10, 11, 12) ménagé respectivement sur une partie inférieure (3b) de la chambre de refroidissement (3), sur la chambre d'extinction (4) et sur le boîtier préleveur (6).

10. Dispositif selon la revendication 9, caractérisé par le fait que l'orifice d'évacuation (10) sur la chambre de refroidissement (3) et l'orifice d'évacuation (11) de la chambre d'extinction (4) s'engagent, respectivement, dans la chambre d'extinction (4) et dans le boîtier préleveur (6).

11. Dispositif selon la revendication 9, caractérisé par des espaces annulaires (13, 14, 15, 16) demeurant à l'écart de la masse de coke, et situés dans la partie supérieure (3a) et dans la partie inférieure (3b) de la chambre de refroidissement (3), dans la chambre d'extinction (4) et dans le boîtier préleveur (6).

12. Dispositif selon la revendication 9, caractérisé par le fait que le pré-compartiment (2) comprend une partie supérieure (2a) raccordée vers le haut au puits d'emplissage (1) et évasée concentriquement vers le bas, une partie centrale cylindrique (2b) ainsi qu'une partie inférieure (2c) à rétrécissement infundibuliforme sur l'orifice d'évacuation (8) ; et par le fait que la partie centrale (2b) ainsi que la partie inférieure (2c) du pré-compartiment (2) sont entourées par une région supérieure cylindrique (17) de l'enveloppe annulaire, dont la zone supérieure se prolonge par le conduit (19) d'évacuation du gaz de refroidissement.

13. Dispositif selon les revendications 8 et 11, caractérisé par une région cylindrique inférieure (18) de l'enveloppe annulaire, qui entoure sur environ 2/3 dans le sens axial la zone supérieure de la partie supérieure (3a) de la chambre de refroidissement (3) et se prolonge, vers le bas, par la partie inférieure infundibuliforme (3b) de la chambre de refroidissement (3), le conduit (25) d'amenée du gaz de refroidissement débouchant dans la zone supérieure de la région inférieure (18) de l'enveloppe annulaire.

14. Dispositif selon la revendication 11, caractérisé par un dispositif (5) de pulvérisation d'eau dans l'espace annulaire (15) de la chambre d'extinction (4).

15. Dispositif selon la revendication 8, caractérisé par un refroidisseur par ruissellement (28), raccordé au conduit de prélèvement (26).

16. Dispositif selon les revendications 14 et 15, caractérisé par un conduit de jonction (33) entre un réservoir à condensat (32) du refroidisseur par ruissellement (28) et le dispositif (5) de pulvérisation d'eau.